# EUROPEAN PATENT APPLICATION

(11) **EP 1 566 718 A1**
(43) Date of publication of application: **24.08.2005**
(21) Application number: 04270018.7
(22) Date of filing: 15.12.2004
(51) Int. Cl.: G06F 1/00, G06F 9/445, H04L 12/24

(54) **Method for Signaling Managed Device Presence to Control Security**

(30) Priority: 22.12.2003 US 743252
(71) Applicant: AT&T Corp., New York, NY 10013-2412 (US)
(72) Inventor: Ronen, Yzhak, 08550, NJ New Jersey (US); O'Neil, Joseph, T., 10308, Staten Island, NY New York (US)
(74) Representative: Suckling, Andrew Michael

(57) **Abstract**

A method for securely downloading files from a database to a managed device that includes selecting a managed device; affixing a unique identification number to the device; creating a file for the managed device on a database, wherein the file can be downloaded over the Internet; creating an access verification program for downloading the file which permits a user of the managed device to access and download the file over the Internet for a period of time; reading the unique identification number by the user; entering the unique identification number into the access verification program by the user; verifying the unique identification number using the access verification program; permitting access to the database by the user for downloading the file for a period of time; downloading the file from the database to the managed device; and blocking access to the database for downloading the file.

## Description

### BACKGROUND OF INVENTION

The present invention is a method for the secure downloading of files over the Internet. In particular, the present invention relates to a method for limiting the window of time when files can be downloaded over the Internet.

The present invention reduces the risk of hacking attacks on managed devices that are downloading configuration files from an Internet Service Provider (ISP) data center by providing a tool to manage these risks. This is a significant security issue that needs to be addressed by the industry in order to reduce the disruptions caused by unauthorized use of systems by hackers.

The installation and initialization of devices that are remotely managed can be expensive, especially for users who have limited information technology (IT) resources. If a device manufacturer sends a technician to a user' facility to install a device and load the configuration file, it can be very costly. Many manufacturers of devices have found it to be more cost efficient to download configuration files via the Internet. For example, one of the services that ISPs provide for their customers is the remote management of routers connected to the Internet from the ISP data center. When a new managed device is shipped to a customer site and needs to be installed, a configuration file is downloaded from the data center to the device (e.g., a network router) over the Internet. This eliminates the need for a costly staging area. The user only has to connect the device to a power source and the Internet. The manufacturer does not have to send a technician to the remotely located device and, in most cases, the user does not need to have trained IT personnel present during the downloading.

When a customer of a network services provider, such as an ISP, purchases services, the provider often provides the customer with a managed device for accessing the provider's services over the Internet. The services provider purchases the managed device from a device manufacturer and has it shipped to the customer's facility where it is installed by the customer. The initial installation usually includes connecting the managed device to a power supply and the Internet. However, before the managed device can be operable, certain software programs, such as configuration files, have to be installed to allow the managed device to communicate with the service provider's network and/or database.

There are several ways for configuration files and other operating files to be downloaded to a managed device. The files can be downloaded at the manufacturer's factory for an additional charge. This would increase the purchase price of the equipment and pose new security risks at the manufacturer's factory and when the device loaded with the software was shipped. The risk is increased even more when the manufacturer is located outside of the United States. The managed device could be stolen during shipment to the customer or a hacker could gain access to the device and copy the configuration file. The managed device could also be shipped to the service provider for downloading of the configuration file, but this would also result in additional costs and security risks when the device was shipped to the customer. Another option, is to have the service provider send an IT person to the customer's facility and directly download the configuration file to the managed device. This avoids the security risks, but it is significantly more costly.

Service providers have found that the most cost effective and easiest method of downloading a configuration file to a managed device is over the Internet. The managed device is installed by the customer and connected to the Internet. A start-up or initialization program loaded onto the managed device by the manufacturer then connects the managed device to the service provider's database over the Internet and the configuration file is automatically downloaded. Such systems are disclosed in U.S. Patent No. 6,067,582 to Smith et al. and U.S. Patent No. 6,587,874 to Golla et al., both of which are incorporated herein in their entirety. However, this system requires the service provider to have the configuration file available for downloading for an unacceptably long period of time. Since the downloading is accomplished automatically over the Internet, the configuration file can still be accessed even after the customer has successfully downloaded the file to the managed device. The configuration file remains accessible until it is removed as part of a scheduled housekeeping of the service provider's database. In some cases, this may result in the configuration file being unnecessarily exposed to illegal downloading by hackers for a period of days or even weeks.

The methods presently used for downloading configuration files over the Internet pose security concerns since the files can easily be intercepted by hackers when they are being made available for downloading by the customer. The hackers can then configure their own computer (or router) with the intercepted configuration file and the ID of the customer's device to create a secure tunnel between the hacker's computer and the data center. This allows a hacker unauthorized and unrestricted access to privileged information in the entire client network.

The methods presently being used for downloading and uploading files over the Internet do not provide security from hackers. For example, Cisco Systems has the IE2100 device to do initial configuration of managed devices but it does not address security concerns. Typical methods for identifying managed devices use the physical box serial number which is hard coded on the device in the form of a metal plate affixed to the chassis. When the serial number is transmitted to the manufacturer, it allows the manufacturer to identify the configuration file that will be downloaded to the managed device. The problem facing device manufacturers is how to make files downloaded over the Internet more secure so that hackers will not be able to intercept them when they are made available for downloading by authorized users.

### SUMMARY OF THE INVENTION

In accordance with the present invention, a method for securely downloading files from a database to a managed device is provided. The method includes selecting a managed device, preferably a router, for interfacing with networks or devices over the Internet; affixing a unique identification number to the device; creating a file, preferably a configuration file, for the managed device on a database, wherein the file can be downloaded over the Internet to the managed device; creating an access verification program for downloading the file, wherein the access verification program permits a user of the managed device at a remote location to access the file over the Internet by entering the unique identification number, and wherein the access verification program permits the user to download the file over the Internet for a period of time; reading the unique identification number by the user; entering the unique identification number into the access verification program by the user; verifying the unique identification number using the access verification program; permitting access to the database by the user for downloading the file for a period of time; downloading the file from the database to the managed device; and blocking access to the database for downloading the file.

In a preferred embodiment of the present invention, the unique identification number is the serial number of the managed device. In another embodiment. the managed device is assigned a password that is used in combination with the unique identification number for access verification.

In one embodiment, the period of time during which the database can be accessed for downloading the file is predetermined when the access program is created. A preferred period of time is less than four hours and a most preferred period of time is less than one hour. In another embodiment, the period of time is selected by the creator of the access verification program or the user.

The user can use a portable device to read the unique identification number from the managed device which communicates with the service provider's data center. Preferred portable devices include a bar code scanner to read the managed device's unique identification number. In one embodiment, the password is also entered in the portable device, either by using a keyboard or by swiping a bar code containing the password. The bar code readers that can be used are well known to those skilled in the art and include bar code scanners manufactured by Symbol Technologies, Inc., Holtsville, NY. The unique identification number and the password are then downloaded from the portable device to the database. This can be accomplished using a wired (e.g., modem, internet or telephone line) or wireless (e.g., LAN, WAN or cell phone) connection. In one embodiment, access to the database for downloading the file is blocked after the file has been downloaded and in another embodiment, access to the database for downloading the file is blocked after the time period has expired.

By limiting access to the database for downloading files to managed devices, the present invention makes it more difficult for hackers to gain access to the files. The files are only available for downloading for a very brief period of time before access is blocked. This provides increased security for the database and the files that are downloaded.

### BRIEF DESCRIPTION OF THE FIGURES

Other objects and many attendant features of this invention will be readily appreciated as the invention becomes better understood by reference to the following detailed description when considered in connection with the accompanying drawings wherein:

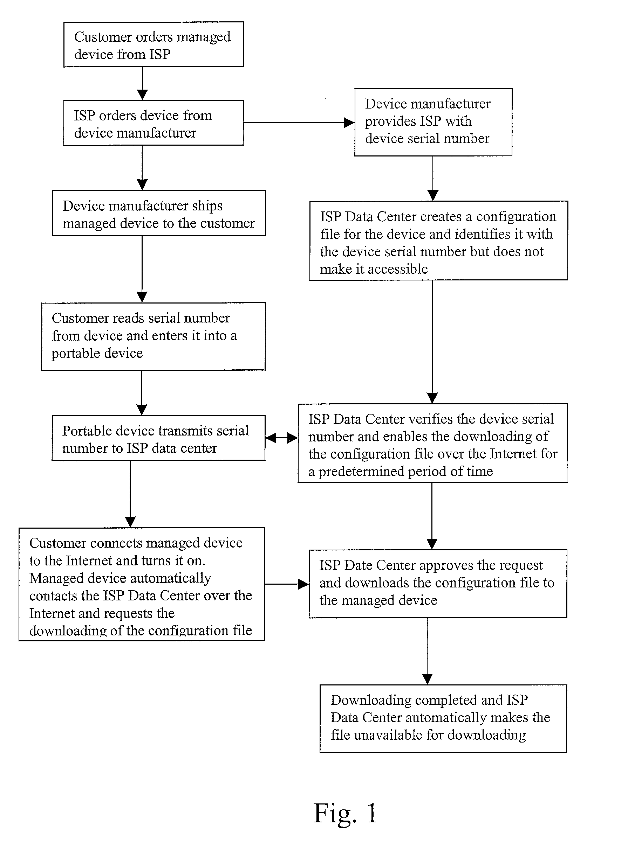

FIG. 1 is a flow chart showing the method of the present invention for securely downloading files from a database to a managed device.

### DETAILED DESCRIPTION OF THE INVENTION

The present invention is a method for limiting access to files that are made available for downloading over the Internet. The longer files are available for downloading, the more likely it is that they will be downloaded by unauthorized persons. In order to limit unauthorized downloading, the method of the present invention limits the window of time when the files are available to a remote user for downloading.

Security is all about risk management and providing systems which minimize a computer network's exposure to risk. The present invention increases security, without the need to use any encryption mechanisms or devices that are hard to maintain, by reducing the time that the configuration file is available for downloading on the Internet. When a service provider makes configuration file (a file that contains configuration information for a particular program - when the program is executed, it consults the configuration file to see what parameters are in effect) or other files available for downloading by a customer over the Internet, the file can be accessed by anyone who has the password and/or access code. This leaves an open door into the service provider's database and allows unauthorized hackers to downloading sensitive files. The method of the present invention opens the door only after the customer has signaled that it is ready to download the files and closes the door immediately after the downloading has been successfully, or in one embodiment unsuccessfully, completed. This allows hackers only a brief opportunity to gain unauthorized access to files in the service provider's database.

The present invention limits the exposure of downloadable files to hackers by reducing the period of time that the file is available for downloading from the data center to an authorized user's managed device. As used in the present invention, the term managed device is any piece of equipment that sits on a data network and runs Simple Network Management Protocol (SNMP, a protocol used to exchange data about network activity), for example, computers, printers, hosts or routers.

For illustrative purposes, the following description of the invention assumes that the managed device is a router and the service provider is an ISP. In accordance with the present invention, the process used by a router to download its configuration file from the ISP data center is shown in the flow chart in Fig. 1 and has the following steps:

(1) A customer contacts an ISP and purchases internet services which require the customer's network or computer system to interface with the ISP using a router (or a similar managed device).

(2) The ISP selects a router based on the requirements of the customers application and orders the device from the device manufacturer (e.g., a router from Cisco). The device manufacturer confirms the order and provides the ISP with the serial number of the router. When the assembly of the router is completed, a nameplate is permanently affixed to the chassis of the router and it contains pertinent information about the device, including the serial number. This information can be in a text form and/or contained in a bar code.

(3) The ISP data center creates a configuration file for the router according to the requirements of the customer's application. (In some embodiments, additional files may also be created for downloading to the customer's device.) The serial number corresponding to the device is included in the file's access information program to ensure that the configuration file is dedicated to the correct router. The configuration file is stored on the ISP's database but it is not immediately made available for downloading by the customer. If a download request for a managed device with this serial number arrives at the data center, it will be refused. In a preferred embodiment, the ISP data center includes the date when the router is scheduled to be delivered to the customer's facility in the access program and prevents access for downloading the configuration file until after that date. The ISP data center also creates an access verification program and programs the identification number and/or password for a portable device into the access program. The portable device is sent to the customer where it is used to read the unique identification number of the managed device (i.e., the router) when the managed device arrives at the customer's facility.

(4) The router is shipped to the customer's facility from the device manufacturer. In one embodiment of the present invention, the shipper reports delivery to the manufacturer and/or the ISP data center using a package tracking system which sends an e-mail. Upon receipt of the e-mail message, the ISP data center permits the customer access for the verification step described below.

(5) The customer reads the serial number of the router directly from the nameplate into the portable device (in some embodiments the customer also enters a password), preferably a wireless device that transmits the serial number to the data center for verification. Such a device is disclosed in United States Patent No. 6,665,745 to Masterson, et al. which is incorporated herein in its entirety. The information is entered on the portable device using a keypad. In a preferred embodiment of the present invention, a bar code scanner is used to read the serial number and/or password.

(6) The portable device transmits the serial number of the router (and, in a preferred embodiment, the password) to the ISP data center via a wireless or wired connection. In some embodiments of the present invention, other means may be used for reading the serial number and transmitting it to the ISP data center. For example, the customer could write down the serial number and transmit it in combination with a password to the ISP data center using the keypad of a touch-tone telephone or an Internet connection. Those skilled in the art will appreciate that there are numerous methods for communicating a series of alphanumeric characters to a remote data center.

(7) The ISP data center authenticates the portable device (or password), reads the serial number of the router, and then enables the configuration file of the router for the customer's application so that it is available for downloading via the Internet. The configuration file is enabled for a predetermined period of time. In some embodiments of the present invention, the customer determines the period of time that the configuration file will be available for downloading when he submits the serial number to the data center. If the configuration file has not been downloaded within the prescribed time period, access to the configuration file is disabled and the customer has to resubmit the verification information to make the configuration file available for downloading a second time. This can be done either manually or by using the portable device to resubmit the serial number. In a preferred embodiment of the present invention, once the predetermined time period expires, the configuration file cannot be made available by verification procedure using the portable device and the customer must contact the ISP's data center to request access for downloading the files.

(8) The customer connects the router to a power source and the Internet and turns it on. The router automatically dials up and connects to the ISP data center via the Internet connection and makes a request to download the configuration file. In a preferred embodiment, the customer is provided with a password which is used in combination with the serial number to verify that the customer has authorization to download the files. When the customer is provided with a portable verification device, the password is either programmed into the portable device by the IPS data center before it is shipped to the customer or the password is transmitted to the customer who enters it into the portable device. When the portable verification device includes a bar code scanner, the IPS data center can send a bar code to the customer containing the password. The customer can then easily scan the password into the portable device.

(9) The ISP data center compares the serial number and password submitted by the customer to the information entered into its access program. If the access program authenticates the serial number and password, the ISP data center makes the configuration file available for downloading over the Internet. Typically, the customer will have 24 to 72 hours to complete the downloading of the configuration file. In a preferred embodiment, the customer will have 2 to 4 hours to download the files and in a most preferred embodiment the customer will have 30 to 60 minutes to download the files. The period of time that the configuration file is available for downloading can be predetermined by the ISP data center or it can be agreed to in advance between the data center and the customer. Since the customer and the ISP are both concerned about hackers accessing the configuration file, it is desirable to minimize the period of time when the files are accessible. In one embodiment, the customer selects the time period when the serial number is submitted for authentication. This can be done using a prompt from the data center access program. Once the downloading of a file is begun, access to the files will not be disabled until the download is completed. In one embodiment of the present invention, access to download the configuration file is not terminated until the time period has expired. In another embodiment, as soon as the download is completed, the ISP data center disables the downloading of the configuration file. In a most preferred embodiment of the present invention, if the customer has not successfully downloaded the configuration file and access to download has been disabled but has not timed out, the customer can resubmit the serial number and password a second time and make a second attempt to download the file.

Reducing the window of time that the ISP data center permits access to a configuration file for downloading significantly increases the security of files downloaded from the ISP's data center. In order to access the ISP data center and download files, a hacker has to know the serial number of a device and the password, as well as the date and time when the configuration file will be available for downloading by the customer. Accordingly, the present invention improves the security of files downloaded over the Internet by reducing the period of time when files are susceptible to unauthorized access by hackers.

Thus, while there have been described the preferred embodiments of the present invention, those skilled in the art will realize that other embodiments can be made without departing from the spirit of the invention, and it is intended to include all such further modifications and changes as come within the true scope of the claims set forth herein.

## Claims

1. A method for securely downloading files to a managed device, the method comprising the steps of:
selecting a managed device for interfacing with networks or devices over the Internet;
assigning a unique identification number to the device;
creating a file for the managed device on a database, wherein the file can be downloaded over the Internet to the managed device;
creating an access verification program for downloading the file, wherein the access verification program permits a user of the managed device at a remote location to access the file over the Internet by entering the unique identification number, and wherein the access verification program permits the user to download the file over the Internet for a period of time;
receiving an identification number from the user;
verifying that the identification number received from the user is the same as the unique identification number;
permitting access to the database by the user for downloading the file for a period of time;
downloading the file from the database to the managed device; and
blocking access to the database for downloading the file.

2. The method for securely downloading files to a managed device according to claim 1, wherein the file is a configuration file.

3. The method for securely downloading files to a managed device according to claim 1, wherein the managed device is a router.

4. The method for securely downloading files to a managed device according to claim 1, wherein the unique identification number is the serial number of the managed device.

5. The method for securely downloading files to a managed device according to claim 1, further comprising assigning a password to the managed device, wherein the password is used in combination with the unique identification number for access verification.

6. The method for securely downloading files to a managed device according to claim 1, wherein the period of time is predetermined.

7. The method for securely downloading files to a managed device according to claim 1, wherein the period of time is less than four hours.

8. The method for securely downloading files to a managed device according to claim 1, wherein the period of time is less than one hour.

9. The method for securely downloading files to a managed device according to claim 1, further comprising selecting a portable device for reading the unique identification number.

10. The method for securely downloading files to a managed device according to claim 1, wherein the unique identification number can be read using a portable device.

11. The method for securely downloading files to a managed device according to claim 10, wherein the portable device comprises a bar code scanner.

12. The method for securely downloading files to a managed device according to claim 10, wherein a password is entered into the portable device.

13. The method for securely downloading files to a managed device according to claim 10, wherein the unique identification number and the password are downloaded from the portable device to the database.

14. The method for securely downloading files to a managed device according to claim 1, wherein access to the database for downloading the file is blocked after the file has been downloaded.

15. The method for securely downloading files to a managed device according to claim 1, wherein access to the database for downloading the file is blocked after the time period has expired.

16. A method for securely downloading files to a router, the method comprising the steps of:
selecting a router for interfacing with networks or devices over the Internet;
assigning a unique identification number to the router;
assigning a unique password to the router;
creating a configuration file for the router on a database, wherein the configuration file can be downloaded over the Internet to the router;
creating an access verification program for downloading the configuration file, wherein the access verification program permits a user of the router at a remote location to access the configuration file over the Internet by entering the unique identification number and password, and wherein the access verification program permits the user to download the configuration file over the Internet for a period of time;
receiving an identification number and a password from the user;
verifying that the identification number and the password received from the user are the same as the unique identification number and the unique password;
permitting access to the database by the user for downloading the configuration file for a period of time;
downloading the configuration file from the database to the router; and
blocking access to the database for downloading the configuration file after the file has been downloaded or the period of time has expired.

17. The method for securely downloading files to a router according to claim 16, wherein the unique identification number is the serial number of the router.

18. The method for securely downloading files to a router according to claim 16, wherein the period of time is predetermined.

19. The method for securely downloading files to a router according to claim 16, wherein the period of time is less than one hour.

20. The method for securely downloading files to a router according to claim 16, further comprising selecting a portable device for reading the unique identification number.

21. The method for securely downloading files to a router according to claim 16, wherein the unique identification number and the unique password can be read using a portable device.

22. The method for securely downloading files to a router according to claim 21, wherein the portable device comprises a bar code scanner.

23. The method for securely downloading files to a router according to claim 21, wherein the unique identification number and the unique password are downloaded from the portable device to the database.

24. The method for securely downloading files to a router according to claim 16, wherein access to the database for downloading the file is blocked after the file has been downloaded.

25. The method for securely downloading files to a router according to claim 1, wherein access to the database for downloading the file is blocked after the time period has expired.
